# EUROPÄISCHE PATENTSCHRIFT

(11) **EP 2 238 943 B1**
(45) Veröffentlichungstag und Bekanntmachung des Hinweises auf die Patenterteilung: **11.09.2013**
(21) Anmeldenummer: 10003686.2
(22) Anmeldetag: 03.04.2010
(51) Int. Cl.: A61C 8/00

(54) **Dentalimplantat**
Dental implant
Implant dentaire

(30) Priorität: 08.04.2009 DE 102009016920
(43) Veröffentlichungstag der Anmeldung: 13.10.2010
(73) Patentinhaber: Metz-Stavenhagen, Peter, 34537 Bad Wildungen (DE)
(72) Erfinder: Metz-Stavenhagen, Peter, 34537 Bad Wildungen (DE)
(74) Vertreter: Walther, Walther & Hinz GbR

(56) Entgegenhaltungen:
- WO-A1-2007/073743
- US-A- 5 871 356
- US-A- 5 890 902
- US-A1- 2005 064 368
- US-A1- 2005 164 146

## Beschreibung

Die vorliegende Erfindung betrifft ein mehrteiliges Dentalimplantat gemäß dem Oberbegriff des Anspruches 1.

Aus der WO 2005/065571 A1 ist ein mehrteiliges Dentalimplantat mit einem Außen angebrachten Gewinde bekannt, an dessen koronalen Ende eine Innen liegende Pfostenaufnahme ausgebildet ist. In diese Pfostenaufnahme kann ein gegebenenfalls gekrümmter Pfosten eingesetzt werden, an dem ein Zahnersatz anbringbar ist. An der Außenseite dieses Dentalimplantates sind längliche Abflachungen ausgebildet, um ein Verdrehen des implantierten Dentalimplantates zu verhindern und um somit eine gute und dauerhafte Verankerung des Dentalimplantates im Kiefer zu erreichen.

Aus dem DE 10 2006 013 456 A1 ist ein einteiliges Dentalimplantat mit einem enossalen Bereich und einem koronalen Bereich bekannt, welches mit einem Außengewinde versehen ist. Am enossalen Bereich ist zumindest eine längliche, konkave Ausnehmung ausgebildet, um ein Verdrehen des Dentalimplantates zu erschweren, sobald sich in dem derart entstandenen Hohlraum Knochensubstanz gebildet hat, um somit eine gute und dauerhafte Verankerung des Dentalimplantates im Kiefer zu erreichen.

Es hat sich jedoch gezeigt, dass derartige Abflachungen oder konkave Ausnehmungen einen nur unwesentlichen Beitrag zur guten und dauerhaften Verankerung des Dentalimplantates leisten.

Aus der WO 2007/073743 A1 ist ein einteiliges Dentalimplantat bekannt, dessen Inneres eine durchgehende Bohrung aufweist. Dabei ist diese Bohrung am endostalen Ende des Korpus zunächst zylinderisch ausgeführt und erfährt im weiteren Verlauf abwechselnd konische und zylindrische Abschnitte. Am Umfang des Dentalimplantates sind eine Anzahl von Perforationen vorgesehen, die mit der Bohrung in Verbindung stehen.

Aus der DE 37 35 378 C2 ist ein Metallimplantat mit einer Verankerungsvorrichtung bekannt, an deren endostalem Ende ein Sackloch vorgesehen ist. Quer zum Sackloch sind zwei radial ausgerichtete Öffnungen vorgesehen, die mit dem Sackloch in Verbindung stehen. Dieses Sackloch ist zylinderisch ausgebildet.

Aus der US 5,871,356 A ist ein Dentalimplantat bekannt, an dessen endostalem Ende eine horizontale Öffnung vorgesehen ist, an die sich radial abstehende Öffnungen anschließen.

Bei allen zuletzt genannten Dentalimplantaten ist es notwendig, im Kiefer ein entsprechendes Loch vorzubohren, bevor das Dentalimplantat eingesetzt wird. Es ist bekannt, dass dieses Vorbohren nicht immer 100%ig präzise ausgeführt werden kann. Dabei kann es passieren, dass der Bohrer schief angesetzt wird oder dass aufgrund eines osteoporösen Kiefers Schwach- oder Fehlstellen entstehen.

Davon ausgehend liegt der vorliegenden Erfindung die Aufgabe zu Grunde, ein Dentalimplantat der eingangs genannten Art zu schaffen, welches sich gut in den Kiefer einbringen lässt und welches sich dauerhaft im Kiefer verankern lässt.

Als technische Lösung dieser Aufgabe wird erfindungsgemäß ein mehrteiliges Dentalimplantat mit den Merkmalen des Anspruches 1 vorgeschlagen. Vorteilhafte Weiterbildungen dieses Dentalimplantates sind den jeweiligen Unteransprüchen zu entnehmen.

Ein nach dieser technischen Lehre ausgebildetes Dentalimplantat hat den Vorteil, dass bei dem erfindungsgemäßen Dentalimplantat ein Vorbohren entfallen kann, denn aufgrund der am endostalen Ende ausgebildeten, koaxial zur Längsachse ausgerichteten Aussparung in Verbindung mit der konischen Verjüngung des Korpus und der am endostalen Ende ausgebildeten umlaufenden Schneide ist es möglich, dieses Dentalimplantat direkt in den Kiefer einzuschrauben. Dabei durchtrennt die umlaufende Schneide den Knochen an der gewünschten Stelle und der so herausgeschnittene Knochen wird von der Aussparung aufgenommen. Durch die konische Ausbildung der Aussparung wird dabei die Knochensubstanz komprimiert mit dem Ergebnis, dass das Dentalimplantat von innen durch die komprimierte Knochensubstanz und von außen durch den Kiefer gehalten wird.

Durch den Verzicht auf das Vorbohren vereinfacht sich der gesamte Eingriff beim Implantieren des Dentalimplantates, so dass auch die Belastung des Patienten hierbei reduziert wird.

Ein weiterer Vorteil besteht darin, dass hierdurch die Oberfläche der Aussparung vergrößert wird und dass die Knochensubstanz sogar in denjenigen Bereichen der Pfostenaufnahme hineinwachsen kann, in der sich kein Pfosten befindet.

Noch ein weiterer Vorteil besteht darin, dass in die am endostalen Ende am Korpus ausgebildete Aussparung Knochensubstanz weiter hineinwachsen kann und dass diese Knochensubstanz an der Oberfläche der innenliegenden Aussparung anwächst und so die Osseointegration verbessert. Dies geschieht zum einen dadurch, dass durch die in die Aussparung einwachsende Knochensubstanz die Querstabilität erhöht wird und zum anderen dadurch, dass durch die Aussparung die mit der Knochensubstanz in Kontakt tretende Oberfläche des Dentalimplantates vergrößert wird, so dass für die Knochensubstanz eine größere Fläche zum Anwachsen zur Verfügung steht.

Noch ein weiterer Vorteil besteht darin, dass, wie oben ausgeführt, durch die Aussparung die Oberfläche des Dentalimplantats vergrößert wird, so dass eine größere Fläche zum Anwachsen der Knochensubstanz zur Verfügung steht. Noch ein weiterer Vorteil besteht darin, dass die Knochensubstanz gar nicht erst entfernt werden braucht, und dass sich die Knochensubstanz im Bereich des Dentalimplantates verdichtet, so dass bereits aufgrund dieser Kompression ein gewisser Haltedruck auf das Dentalimplantat ausgeübt wird. Im Ergebnis wird hierdurch die Osseointegration deutlich verbessert, also eine gute und dauerhafte Verankerung des Dentalimplantates im Kiefer erreicht.

Als zweite technische Lösung dieser Aufgabe wird erfindungsgemäß ein mehrteiliges Dentalimplantat mit den Merkmalen des Anspruches 5 und ein einteiliges Dentalimplantat mit den Merkmalen des Anspruches 15 vorgeschlagen. Vorteilhafte Weiterbildungen dieser Dentalimplantate sind den jeweiligen Unteransprüchen zu entnehmen.

Ein nach dieser technischen Lehre ausgebildetes Dentalimplantat hat den Vorteil, dass durch die radial zur Längsachse des Korpus ausgebildete, den Korpus durchdringende Öffnung am Dentalimplantat ein Hohlraum geschaffen wird, in den Knochensubstanz einwachsen kann. Durch diesen Hohlraum wird, wie bereits oben ausgeführt, die Oberfläche des Dentalimplantates vergrößert, so dass mehr Knochensubstanz am Dentalimplantat anwachsen kann, um die Osseointegration zu verbessern. Ein weiterer Vorteil besteht darin, dass die radial zur Längsachse angeordneten Öffnungen auch ein Herausbewegen des Dentalimplantates aus dem Kiefer verhindern.

In einer bevorzugten Ausführungsform ist die Öffnung hohlzylindrisch ausgebildet. Dies erleichtert das Anbringen der Öffnung an dem vorbereiteten Dentalimplantat, da dies in diesem Fall durch einfaches Bohren erfolgen kann.

Es hat sich als vorteilhaft erwiesen, die Öffnung nicht größer als 1 mm auszugestalten, damit die Stabilität des Dentalimplantates nicht über Gebühr geschwächt wird.

In einer vorteilhaften Ausführungsform ist die Öffnung im Bereich der Aussparung und/oder im Bereich der Pfostenaufnahme angeordnet, so dass die Knochensubstanz über die Öffnung in die Aussparung bzw. in die Pfostenaufnahme hineinwachsen kann. Dies hat den Vorteil, dass die Knochensubstanz das Dentalimplantat durchdringen kann, um die Osseointegration zu verbessern.

In einer besonders bevorzugten Weiterbildung sind in einer Ebene zur Längsachse des Korpus zwei oder mehr Öffnungen angeordnet, die vorteilhafterweise äquidistant angeordnet sind. Dies hat den Vorteil, dass die Knochensubstanz von verschiedenen Seiten in das Dentalimplantat einwachsen kann, um das Dentalimplantat gut und dauerhaft im Kiefer zu verankern.

Weitere Vorteile der erfindungsgemäßen Dentalimplantate ergeben sich aus der beigefügten Zeichnung und den nachstehend beschriebenen Ausführungsformen. Ebenso können die vorstehend genannten und die noch weiter ausgeführten Merkmale erfindungsgemäß jeweils einzeln oder in beliebigen Kombinationen miteinander verwendet werden. Die erwähnten Ausführungsformen sind nicht als abschließende Aufzählung zu verstehen, sondern haben vielmehr beispielhaften Charakter. Es zeigen:
- Fig. 1: eine geschnitten dargestellte erste Ausführungsform eines Dentalimplantates, das nicht Teil der Erfindung ist;
- Fig. 2: eine geschnitten dargestellte zweite Ausführungsform eines Dentalimplantates, das nicht Teil der Erfindung ist;
- Fig. 3: eine geschnitten dargestellte dritte Ausführungsform eines erfindungsgemäßen Dentalimplantates;
- Fig. 4: eine geschnitten dargestellte vierte Ausführungsform eines erfindungsgemäßen Dentalimplantates;
- Fig. 5a: eine geschnitten dargestellte fünfte Ausführungsform eines Dentalimplantates, geschnitten entlang Linie Va - Va in Fig. 5b, das nicht Teil der Erfindung ist;
- Fig. 5b: eine geschnitten dargestellte Draufsicht auf das Dentalimplan- tat gemäß Fig. 5a, geschnitten entlang Linie Vb - Vb in Fig. 5a;
- Fig. 6: eine geschnitten dargestellte sechste Ausführungsform eines Dentalimplantates, das nicht Teil der Erfindung ist;
- Fig. 7: eine geschnitten dargestellte siebte Ausführungsform eines erfindungsgemäßen Dentalimplantates;
- Fig. 8: eine geschnitten dargestellte achte Ausführungsform eines erfindungsgemäßen Dentalimplantates;
- Fig. 9: eine geschnitten dargestellte neunte Ausführungsform eines erfindungsgemäßen Dentalimplantates;
- Fig. 10: eine geschnitten dargestellte zehnte Ausführungsform eines erfindungsgemäßen Dentalimplantates.

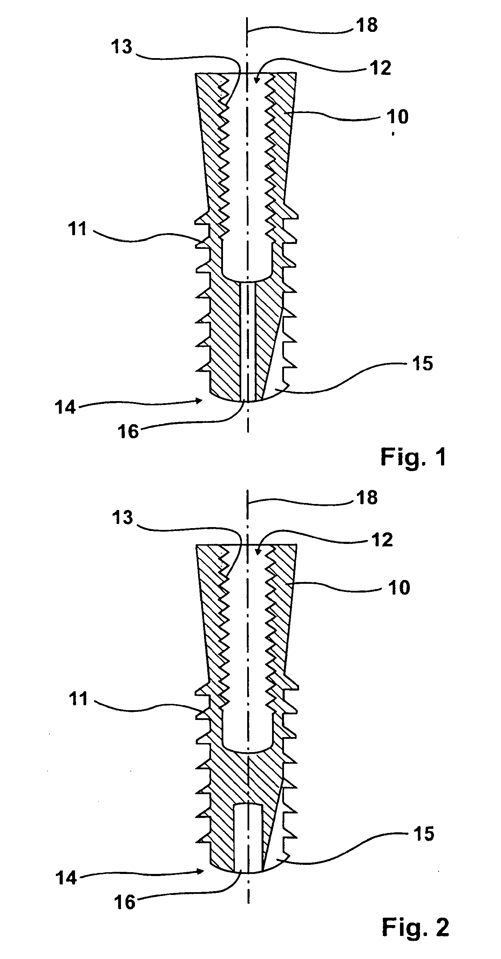

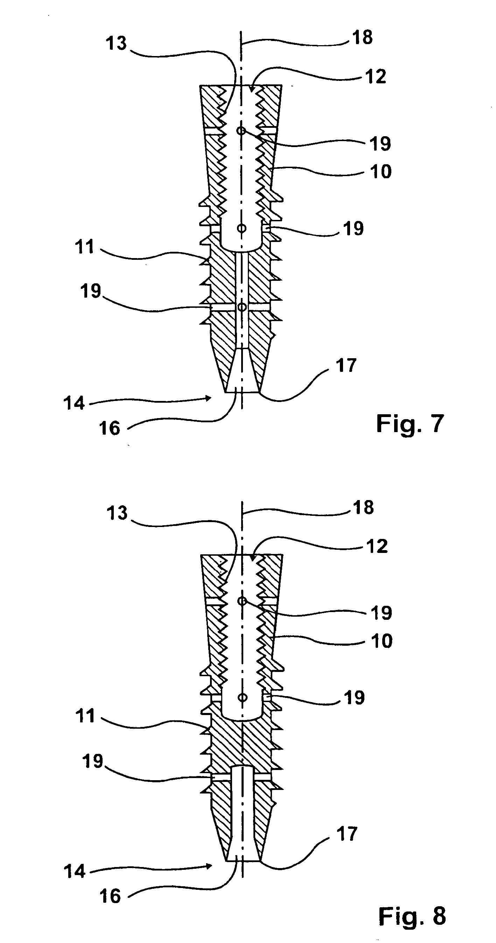

In den Figuren 1 bis 8 sind acht verschiedene Ausführungsformen eines mehrteiligen Dentalimplantates dargestellt, wobei aus Gründen der Anschaulichkeit hier nur der in den Kiefer einzusetzende Implantatteil abgebildet ist. Dieses mehrteilige Dentalimplantat umfasst einen Korpus 10 mit einem Außengewinde 11 und einer am koronalen Ende des Korpus 10 ausgebildeten Pfostenaufnahme 12. Die Pfostenaufnahme 12 umfasst ein Innengewinde 13 zur Aufnahme eines mit einem Außengewinde versehenen Pfostens, der hier nicht näher dargestellt ist.

Am endostalen Ende 14 des Korpus 10 ist ein Einschnitt 15 ausgebildet, der das Eindrehen des Dentalimplantates in den Kiefer erleichtert. Am endostalen Ende 14 ist des Weiteren eine Aussparung 16 vorgesehen, die bei der ersten, dritten, fünften und sieben Ausführungsform gemäß den Figuren 1, 3, 5a, 5b und 7 als bis zur Pfostenaufnahme 12 reichende, durchgehende Bohrung ausgebildet ist, während die Aussparung 16 gemäß der zweiten, vierten, sechsten und achten Ausführungsform entsprechend den Figuren 2, 4, 6 und 8 als Sackloch ausgebildet ist.

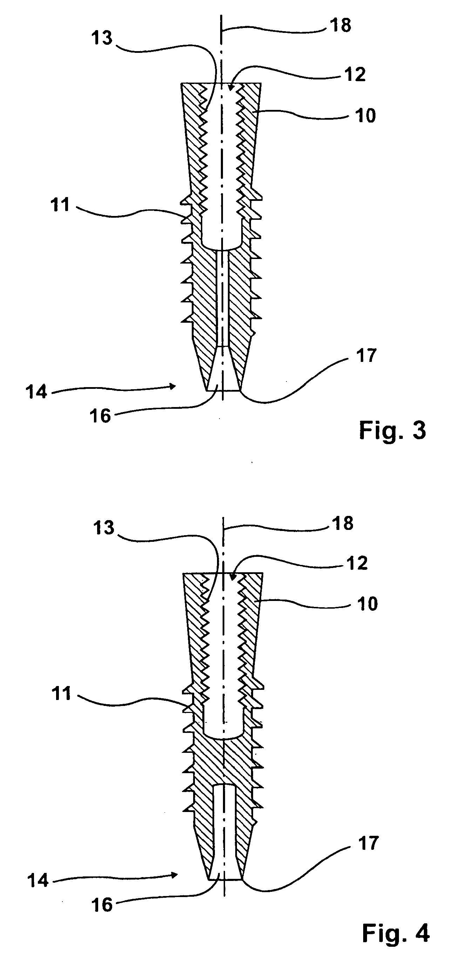

Bei der dritten, vierten, siebten und achten Ausführungsform gemäß den Figuren 3, 4, 7 und 8 ist die Aussparung 16 in einem Teilbereich nahe dem endostalen Ende 14 konisch verjüngend ausgebildet, wobei sich am endostalen Ende 14 eine umlaufende Schneide 17 ausbildet. Dabei ist auch die Außenkontur des Korpus 10 am endostalen Ende sich konisch erweiternd ausgebildet.

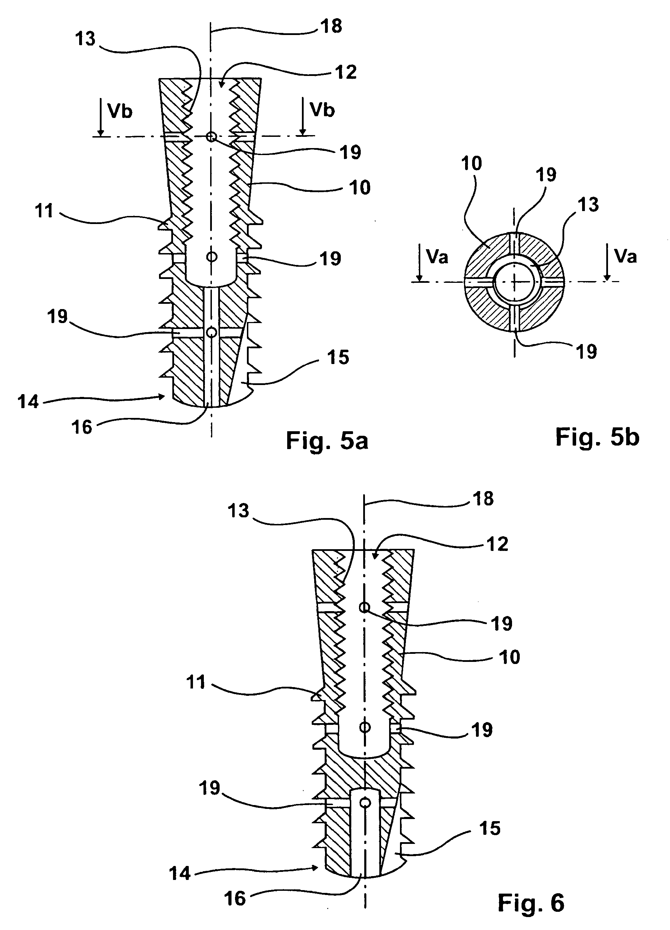

In den Ausführungsformen fünf bis acht gemäß den Figuren 5a, 5b, 6, 7 und 8 sind radial zu einer Längsachse 18 de Korpus 10 Öffnungen 19 ausgebildet, die in diesen Ausführungsformen als hohlzylindrische Bohrung ausgeführt sind. In diesen Ausführungsformen sind in einer Ebene jeweils vier Öffnungen 19 vorgesehen, die im Winkel von 90° zueinander angeordnet sind. Über dem Korpus 10 verteilt sind drei solche Ebenen solchen mit jeweils vier Öffnungen 19 ausgebildet. All diese Öffnungen 19 münden entweder in die Aussparung 16 oder in die Pfostenaufnahme 12.

In einer anderen, hier nicht dargestellten Ausführungsform kann die Öffnung auch an anderer Stelle durch den Korpus hindurchgeführt werden. In noch einer anderen Ausführungsform sind die Öffnungen nicht in einer Ebene, sondern in Axialrichtung versetzt zueinander angeordnet.

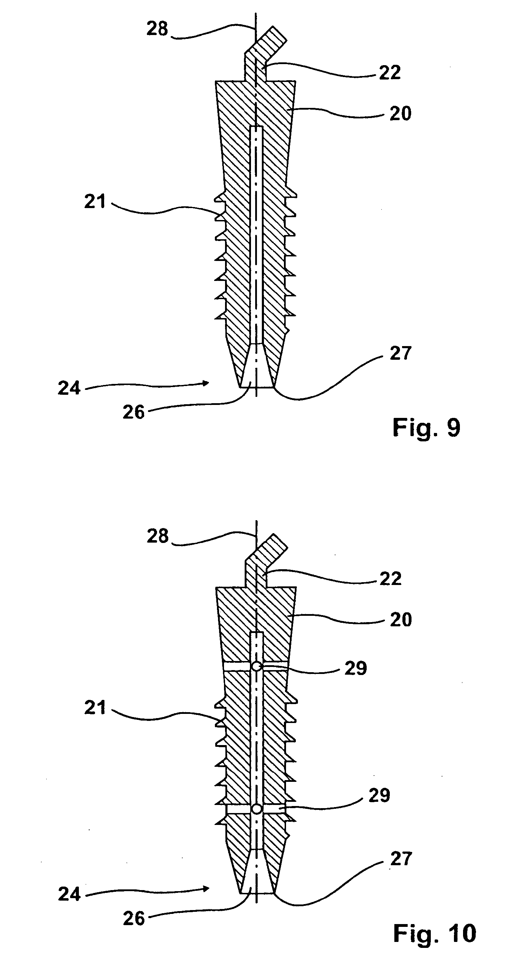

Bei der in den Figuren 9 und 10 dargestellten neunten und zehnten Ausführungsform handelt es sich um ein einteiliges Dentalimplantat, welches ebenfalls einen Korpus 20 und ein Außengewinde 21 aufweist. In diesen beiden Ausführungsformen ist an den Korpus 20 eine Aufnahme 22 einstückig angeformt, auf die dann später der eigentliche Zahnersatz aufgesetzt wird.

Am endostalen Ende 24 des Korpus 20 ist eine Aussparung 26 vorgesehen, die hier als Sackloch ausgebildet ist. Dabei reicht die Aussparung 26 bis nahe an das koronale Ende des Korpus 20 heran. Am endostalen Ende 24 ist die Aussparung 16 sich konisch verjüngend ausgebildet, während der Korpus 20 sich analog hierzu konisch verbreiternd ausbildet, so dass sich am endostalen Ende 24 eine Schneide 27 ausbildet.

In der in Figur 10 dargestellten zehnten Ausführungsform sind zusätzlich Öffnungen 29 vorgesehen, die als durchgehende Bohrung ausgeführt sind, und die sich radial zur Längsachse 28 des Korpus 20 hin erstrecken. Über den Umfang des Korpus 20 verteilt sind äquidistant vier Öffnungen 29 vorgesehen, so dass die einzelnen Öffnungen 29 rechtwinklig zueinander angeordnet sind. Diese Öffnungen 29 sind in einer gemeinsamen Ebene angeordnet, wobei am gesamten Korpus 20 zwei solche Ebenen vorgesehen sind.

Die Aussparungen 16, 26 und die Öffnungen 19, 29 bewirken, dass die Oberfläche des Korpus 10, 20 vergrößert wird, so dass mehr Knochensubstanz am Korpus anwachsen kann. Durch diese derartige vergrößerte Kontaktfläche wird der Halt des Dentalimplantates im Kiefer verbessert, was zu einer besseren Osseointegration führt.

Die Ausbildung einer Schneide 17, 27 in Kombination mit der Aussparung 16, 26 ermöglicht es, dass Dentalimplantat ohne vorheriges Vorbohren im Kiefer einzusetzen. Dabei schneidet sich die Schneide 17, 27 ihren Weg durch den Kiefer, wobei der Kieferknochen an dieser Stelle komprimiert wird, und von der Aussparung 16, 26 aufgenommen wird. Aufgrund dieser Kompression entsteht bereits ein gewisser Halt des Dentalimplantates im Körper, der durch die vergrößerte Kontaktfläche noch weiter verbessert wird. Darüber hinaus hält das Dentalimplantat auch durch das Außengewinde 11, 21 sehr gut im Kiefer.

Nachdem das Dentalimplantat im Kiefer eingewachsen ist, befindet sich Knochensubstanz nicht nur in der Aussparung 16, 26, sondern auch in den diversen Öffnungen 19, 29, so dass das Dentalimplantat von Knochensubstanz regelrecht durchzogen ist, was zu einer erhöhten Osseointegration führt

### Bezugszeichenliste:

- 10, 20,: Korpus
- 11, 21: Außengewinde
- 12, 22: (Pfosten-) Aufnahme
- 13,: Innengewinde
- 14, 24: endostales Ende
- 15,: Einschnitt
- 16, 26: Aussparung
- 17, 27: Schneide
- 18, 28: Längsachse
- 19, 29: Öffnung

## Patentansprüche

1. Dentalimplantat mit einem Korpus (10), mit einem am endostalen Bereich des Korpus (10) angebrachten Außengewinde (11) und mit einer im Inneren des Korpus (10) ausgebildeten Pfostenaufnahme (12), wobei am endostalen Ende (14) des Korpus (10) eine koaxial zur Längsachse (18) des Korpus (10) ausgerichtete Aussparung (16) ausgebildet ist, und wobei die Aussparung (16) vom endostalen Ende (14) des Korpus (10) aus zumindest teilweise konisch verjüngend ausgebildet ist,
**dadurch gekennzeichnet,**
**dass** angrenzend an die Aussparung (16) am endostalen Ende (14) des Korpus (10) eine umlaufende Schneide (17) ausgebildet ist

2. Dentalimplantat nach Anspruch 1,
**dadurch gekennzeichnet,**
**dass** radial zur Längsachse (18) des Korpus (10) mindestens eine, den Korpus (10) durchdringende Öffnung (19) ausgebildet ist.

3. Dentalimplantat nach Anspruch 2,
**dadurch gekennzeichnet,**
**dass** die Öffnung (19) hohlzylindrisch ausgebildet ist.

4. Dentalimplantat nach einem der Ansprüche 2 oder 3,
**dadurch gekennzeichnet,**
**dass** die Öffnung (19) eine lichte Weite von maximal 1 mm aufweist.

5. Dentalimplantat nach einem der Ansprüche 2 bis 4,
**dadurch gekennzeichnet,**
**dass** die Öffnung (19) im Bereich der Aussparung (16) angeordnet ist und sich mit dieser verbindet.

6. Dentalimplantat nach einem der Ansprüche 2 bis 5,
**dadurch gekennzeichnet,**
**dass** die Öffnung (19) im Bereich der Pfostenaufnahme (12) angeordnet ist und sich mit dieser verbindet.

7. Dentalimplantat nach einem der Ansprüche 2 bis 6,
**dadurch gekennzeichnet,**
**dass** in einer Ebene quer zur Längsachse (18) des Korpus (10) zwei oder mehr Öffnungen (19) angeordnet sind.

8. Dentalimplantat nach Anspruch 7,
**dadurch gekennzeichnet,**
**dass** die Öffnungen (19) äquidistant angeordnet sind.

## Claims

1. A dental implant having a corpus (10), an external thread (11) attached on the endosteal area of the corpus (10) and a post accommodation (12) formed in the inside of the corpus (10), whereas a recess (16) is formed on the endosteal end (14) of the corpus (10) coaxially to the longitudinal axis (18) of the corpus (10), wherein the recess (16) starting from the endostal end (14) of the corpus (10) is at least partially formed conically tapered,
**characterized in that**
adjacent to the recess (16) on the endostal end (14) of the corpus (10) a circumferential cutting edge (17) is formed.

2. A dental implant according to claim 1,
**characterized in that**
radially to the longitudinal (18) axis of the corpus (10) at least one opening (19) penetrating the corpus (10) is formed.

3. A dental implant according to claims 2,
**characterized in that**
the opening (19) is shaped like a hollow cylinder.

4. A dental implant according to one of the claims 2 or 3,
**characterized in that**
the opening (19) has an inner width of not more than 1 mm.

5. A dental implant according to one of claims 2 - 4,
**characterized in that**
the opening (19) is located in the area of the recess (16) and is connected with it.

6. A dental implant according to one of claims 2 - 5,
**characterized in that**
the opening (19) is located in the area of the post accommodation (12) and is connected with it.

7. A dental implant according to one of claims 2 - 6,
**characterized in that**
two or more openings (19) are located in a plane transversely to the longitudinal (18) axis of the corpus (10).

8. A dental implant according to claim 7,
**characterized in that**
the openings (19) are located equidistantly.

## Revendications

1. Implant dentaire ayant un corps (10) comportant un filetage extérieur (11) disposé dans la zone endostéale du corps (10) et un réceptacle de pilier (12) formé à l'intérieur du corps (10), dans lequel l'extrémité endostéale (14) du corps (10) comporte un évidement (16) ménagé coaxialement par rapport à l'axe longitudinal (18) du corps (10) et dans lequel l'évidement (16) se rétrécit au moins partiellement de façon conique depuis l'extrémité endostéale (14) du corps (10),
**caractérisé en ce que,**
un tranchant périphérique (17) est ménagé à la périphérie de l'évidement (16) à l'extrémité endostéale (14) du corps (10).

2. Implant dentaire selon la revendication 1,
**caractérisé en ce que,**
au moins une ouverture (19) traversant le corps (10) est ménagée radialement par rapport à l'axe longitudinal (18) du corps (10).

3. Implant dentaire selon la revendication 2,
**caractérisé en ce que,**
l'ouverture (19) a une forme cylindrique creuse.

4. Implant dentaire selon une des revendications 2 ou 3,
**caractérisé en ce que,**
l'ouverture (19) a une section de 1 mm au maximum.

5. Implant dentaire selon une des revendications 2 à 4,
**caractérisé en ce que,**
l'ouverture (19) est ménagée dans le secteur de l'évidement (16) et est reliée à ce dernier.

6. Implant dentaire selon une des revendications 2 à 5,
**caractérisé en ce que,**
l'ouverture (19) est ménagée dans le secteur du réceptacle de pilier (12) et est reliée à ce dernier.

7. Implant dentaire selon une des revendications 2 à 6,
**caractérisé en ce que,**
deux ou plusieurs ouvertures (19) sont ménagées dans un plan transversal par rapport à l'axe longitudinal (18) du corps (10).

8. Implant dentaire selon la revendication 7,
**caractérisé en ce que,**
les ouvertures (19) sont disposées de façon équidistantes.
